# EUROPEAN PATENT APPLICATION

(11) **EP 1 916 502 A1**
(43) Date of publication of application: **30.04.2008**
(21) Application number: 06812013.8
(22) Date of filing: 19.10.2006
(51) Int. Cl.: G01C 21/00, G08G 1/137

(54) **NAVIGATION DEVICE, MAP SERVER, MAP UPDATING SYSTEM, MAP UPDATING METHOD, AND MAP UPDATING PROGRAM**

(30) Priority: 08.11.2005 JP 2005323822
(71) Applicant: AISIN AW CO., LTD., Anjo-shi, Aichi 444-1192 (JP); TOYOTA JIDOSHA KABUSHIKI KAISHA, Toyota-shi, Aichi-ken, 471-8571 (JP)
(72) Inventor: NAKAMURA, Norihiro, AISIN AW CO., LTD., Okazaki-shi, Aichi 4448564 (JP); SAWAI, Kimiyoshi, AISIN AW CO., LTD., Okazaki-shi, Aichi 4448564 (JP); MAEKAWA, Kazuteru, AISIN AW CO., LTD., Okazaki-shi, Aichi 4448564 (JP); KOSHIBA, Sadahiro, AISIN AW CO., LTD., Okazaki-shi, Aichi 4448564 (JP); SUGIMOTO, Hironobu, TOYOTA JIDOSHA KABUSHIKI KAISHA, Toyota-shi, Aichi 4718571 (JP); NAKAMURA, Motohiro, TOYOTA JIDOSHA KABUSHIKI KAISHA, Toyota-shi, Aichi 4718571 (JP)
(74) Representative: TBK-Patent
(86) International application number: PCT/JP2006/320825
(87) International publication number: WO 2007/055086

(57) **Abstract**

A navigation device, a map server, a map update system, a map update method and a map update program are provided, which shorten a communication time for communicating update data.

An update file for updating navigation map data is selected from a server file of server map data, which corresponds to a respective partition file of navigation map data and which is managed for every road update level corresponding to an updated road class in a partition. Such an update file satisfies a file determination attribute that specifies an update-targeted road class to be updated in a partition file.

## Description

### TECHNICAL FIELD

The present invention relates to a navigation device, a map server, a map update system, a map update method and a map update program for updating map data of the navigation device.

### BACKGROUND ART

To update map data in a specified area of a navigation device, conventionally, a known navigation device obtains a file of a modified portion of the update-targeted area from a map center, another navigation device or the like to update map data (see Patent Documents 1 and 2 for examples).
However, during update processing that obtains all of the modified portion of the update-targeted area from the map center or another navigation device, if the update-targeted area is wide, the navigation device must obtain a large update data volume through communications from the map center or another navigation device. This leads to the problem of a lengthy communication time.

Patent Document 3 discloses a navigation device that, among mesh data that includes road data, classifies areas for which data including all roads are obtained and areas for which data including only main roads are obtained, so as to obtain update data.
However according to Patent Document 3, all mesh data including road data must be obtained in areas where the map data is updated by obtaining data that includes all roads. As a consequence, in the case of a wide area for which data including all roads is obtained, the navigation device must obtain a large update data volume through communications. This also leads to the problem of a lengthy communication time.

Patent Document 1: Japanese Patent Application Publication No. JP-A-2004-177245
Patent Document 2: Japanese Patent Application Publication No. JP-A-2004-212244
Patent Document 3: Japanese Patent Application Publication No. JP-A-2003-75174

### DISCLOSURE OF THE INVENTION

### Problem to be Solved by the Invention

The present invention was devised in order to solve the above problem, and it is an object of the present invention to provide a navigation device, a map server, a map update system, a map update method and a map update program that shorten a communication time for communicating update data.

### Means for Solving the Problem

(1) A navigation device for achieving the above object updates navigation map data using an update file obtained from server map data by a map server that manages the server map data. The navigation device is characterized by comprising: communication means for receiving the update file for updating a partition file that corresponds to a respective partition of the navigation map data, which is divided into a plurality of partitions, from the map server; and update means for updating the navigation map data using the update file, wherein the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.

According to such a configuration, compared to the case of obtaining all update files in the update-targeted area, the update file is selected from the server file, which corresponds to the respective partition file and which is managed for every road update level corresponding to the updated road class in the partition of the navigation map data. Therefore, even in cases where the road class to be updated consists of all roads in the partition file of the navigation map data, the server file of the road update level corresponding to the road class to be updated in the partition is selected as the update file, instead of selecting the server files of all road class levels corresponding to the partition file. As a consequence, a total data volume of the update file for updating the navigation map data is reduced. Therefore, a communication time for sending the update data that is received by the navigation device from the map server is reduced. Furthermore, the load on the navigation device that updates the navigation map data using the received update file is also decreased.

(2) The navigation device may further comprise reference point setting means for setting a reference point used to update the navigation map data, wherein the file determination attribute may specify the update-targeted road class depending on a distance between the reference point and the partition.
The file determination attribute is specified depending on the distance of the update-targeted road class to be updated in the partition file from the reference point. Therefore, the data volume of the update file is less than that when all update files are obtained regardless of distance.

(3) The server file of the server map data having a version identical to or more recent than a reference version may be a difference file from an immediately prior version.
The server files of the server map data corresponding to the partitions of the navigation map data are managed as difference files from the immediately prior version, instead of being all difference files from a reference version of the server map data. Therefore, by comparing the partition file of the navigation map data and the difference file of the server map data, it is possible to set only the difference file of the required version for updating the partition file as the update file. Accordingly, the data volume of the update file for updating the navigation map data can be reduced to a great extent.

(4) The navigation device may further comprise file attribute setting means for setting the file determination attribute; determination means for determining whether the partition file must be updated by comparing the file determination attribute and a file attribute that corresponds to the road update level of the server file; and selection means for selecting the update file that satisfies the file determination attribute from the server file, with the update file used to update the partition file determined by the determination means as requiring updating.

(5) The map server may set the file determination attribute, determine whether the partition file must be updated by comparing the file determination attribute and a file attribute that corresponds to the road update level of the server file, and select the update file that satisfies the file determination attribute from the server file, with the update file used to update the partition file determined as requiring updating based on this determination result.

The map server sets the file determination attribute, determines whether the partition file must be updated, and selects the update file from the server map data. Therefore, the processing load of the navigation device required for updating the navigation map data can be decreased more than when the navigation device sets the file determination attribute, determines whether the partition file must be updated and selects the update file from the server file.

(6) There may be more classes regarding the update-targeted road class specifying the file determination attribute for partitions closer to the reference point.
For example, in cases where the reference point is a user residence used by the navigation device, roads in partitions near around the residence are updated to a detail level, while partitions far from the residence are updated only with regard to high-standard roads such as expressways. Thus, the navigation map data can be updated in a manner convenient for the user.

(7) A map server for achieving the above object obtains an update file from server map data in order to update navigation map data using a navigation device. The map server is characterized by comprising: acquisition means for obtaining the update file for updating a partition file that corresponds to a respective partition of the navigation map data, which is divided into a plurality of partitions, from the server map data; and communication means for sending the update file to the navigation device, wherein the update file is selected from a server file of the server map data, which is managed for every road update level corresponding to an updated road class in the partition and which corresponds to a respective partition file, with the update file satisfying a file determination attribute that specifies an update-targeted road class to be updated in the partition file.

According to such a configuration, compared to the case of obtaining all update files in the update-targeted area, the update file is selected from the server file, which corresponds to the respective partition file and which is managed for every road update level corresponding to the updated road class in the partition of the navigation map data. Therefore, even in cases where the road class to be updated consists of all roads in the partition file of the navigation map data, the server file of the road update level corresponding to the road class to be updated in the partition is selected as the update file, instead of selecting the server files of all road update levels corresponding to the partition file. As a consequence, a total data volume of the update file for updating the navigation map data is reduced. Therefore, a communication time for sending the update data that is received by the navigation device from the map server is reduced. Furthermore, the load on the navigation device that updates the navigation map data using the received update file is also decreased.

(8) The file determination attribute may specify the update-targeted road class depending on a distance between a reference point used to update the navigation map data and the partition.
The file determination attribute is specified depending on the distance of the update-targeted road class to be updated in the partition file from the reference point. Therefore, the data volume of the update file is less than that when all update files are obtained regardless of distance.

(9) The map server may further comprise file attribute setting means for setting the file determination attribute; determination means for determining whether the partition file must be updated by comparing the file determination attribute and a file attribute that corresponds to the road update level of the server file; and selection means for selecting the update file that satisfies the file determination attribute from the server file, with the update file used to update the partition file determined by the determination means as requiring updating.

The map server sets the file determination attribute, determines whether the partition file must be updated, and selects the update file from the server map data. Therefore, the processing load of the navigation device required for updating the navigation map data can be decreased more than when the navigation device sets the file determination attribute, determines whether the partition file must be updated and selects the update file from the server file.

(10) A map update system for achieving the above object updates navigation map data using an update file obtained from server map data. The map update system is characterized by comprising: file attribute setting means for setting a file determination attribute that specifies an update-targeted road class to be updated in a partition file corresponding to a respective partition of the navigation map data, which is divided into a plurality of partitions; determination means for determining whether the partition file must be updated by comparing the file determination attribute and a file attribute that corresponds to a road update level of a server file in server map data, wherein the server file corresponds to the respective partition file and is managed for every road update level corresponding to an updated road class in the partition; selection means for selecting the update file that satisfies the file determination attribute from the server file, with the update file used to update the partition file determined by the determination means as requiring updating; acquisition means for obtaining the update file selected by the selection means from the server map data; sending means for sending the update file obtained by the acquisition means; receiving means for receiving the update file sent from the sending means; and update means for updating the navigation map data using the update file received by the receiving means.

According to such a configuration, compared to the case of obtaining all update files in the update-targeted area, the update file is selected from the server file, which corresponds to the respective partition file and which is managed for every road update level corresponding to the updated road class in the partition of the navigation map data. Therefore, even in cases where the road class to be updated consists of all roads in the partition file of the navigation map data, the server file of the road update level corresponding to the road class to be updated in the partition is selected as the update file, instead of selecting the server files of all road class levels corresponding to the partition file. As a consequence, a total data volume of the update file for updating the navigation map data is reduced. Therefore, a communication time of the update file is reduced. Furthermore, an update load for updating the navigation map data using the received update file is also decreased.

(11) The map update system may further comprise reference point setting means for setting a reference point used to update the navigation map data, wherein the file determination attribute may specify the update-targeted road class depending on a distance between the reference point and the partition.
The file determination attribute is specified depending on the distance of the update-targeted road class to be updated in the partition file from the reference point. Therefore, the data volume of the update file is less than that when all update files are obtained regardless of distance.

(12) A map update method for achieving the above object updates navigation map data using an update file obtained from server map data by a map server that manages the server map data. The map update method is characterized by including: a communication step for receiving the update file for updating a partition file that corresponds to a respective partition of the navigation map data, which is divided into a plurality of partitions, from the map server; and an update step for updating the navigation map data using the update file, wherein the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.

According to the map update method, compared to the case of obtaining all update files in the update-targeted area, the update file is selected from the server file, which corresponds to the respective partition file and which is managed for every road update level corresponding to the updated road class in the partition of the navigation map data. Therefore, even in cases where the road class to be updated consists of all roads in the partition file of the navigation map data, the server file of the road update level corresponding to the road class to be updated in the partition is selected as the update file, instead of selecting the server files of all road update levels corresponding to the partition file. As a consequence, a total data volume of the update file for updating the navigation map data is reduced. Therefore, a communication time for sending the update data that is received from the map server is reduced. Furthermore, an update load for updating the navigation map data using the received update file is also decreased.

(13) A map update program for achieving the above object updates navigation map data using an update file obtained from server map data by a map server that manages the server map data. The map update program is characterized in that a computer is enabled to function as communication means for receiving the update file for updating a partition file that corresponds to a respective partition of the navigation map data, which is divided into a plurality of partitions, from the map server, and the computer is enabled to function as update means for updating the navigation map data using the update file, wherein the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.

According to the map update program, compared to the case of obtaining all update files in the update-targeted area, the update file is selected from the server file, which corresponds to the respective partition file and which is managed for every road update level corresponding to the updated road class in the partition of the navigation map data. Therefore, even in cases where the road class to be updated consists of all roads in the partition file of the navigation map data, the server file of the road update level corresponding to the road class to be updated in the partition is selected as the update file, instead of selecting the server files of all road update levels corresponding to the partition file. As a consequence, a total data volume of the update file for updating the navigation map data is reduced. Therefore, a communication time for sending the update data that is received from the map server is reduced. Furthermore, an update load for updating the navigation map data using the received update file is also decreased.

It should be noted that the respective functions of the plurality of means provided in the present invention are realized through a hardware resource whose function is specified by its structure, a hardware resource whose function is specified by a program, or a combination thereof. In addition, the respective functions of this plurality of means are not particularly limited to those realized by hardware resources that are physically independent of each other. Furthermore, the sequence of the respective operations of the method and the program described in the claims is not particularly limited to the described order and may be executed in any sequence or executed simultaneously, provided that there is no technical constraint.

### BRIEF DESCRIPTION OF THE DRAWINGS

[FIG. 1] FIG. 1 is a block diagram of hardware according to a first embodiment.
[FIG. 2] FIG. 2 is a block diagram of software according to the first embodiment.
[FIG. 3] FIG. 3 is an explanatory drawing showing a distance from a reference point.
[FIG. 4] FIG. 4 is an explanatory drawing showing an update process of map data.
[FIG. 5] FIG. 5 is a mapping diagram of a road update level and an updated road class.
[FIG. 6] FIG. 6 is a mapping diagram of a distance from a reference point and an update-targeted road class.
[FIG. 7] FIG. 7 is a flowchart showing a map update according to the first embodiment.
[FIG. 8] FIG. 8 is a block diagram of software according to a second embodiment.
[FIG. 9] FIG. 9 is a flowchart showing a map update according to the second embodiment.

### Description of the Reference Numerals

10 MAP UPDATE SYSTEM
20 NAVIGATION DEVICE
24 COMMUNICATION UNIT (RECEIVING MEANS, COMMUNICATION MEANS)
50 NAVIGATION PROCESSING UNIT (REFERENCE POINT SETTING MEANS, FILE ATTRIBUTE SETTING MEANS, DETERMINATION MEANS, SELECTION MEANS, UPDATE MEANS)
60 CENTER (MAP SERVER)
62 COMMUNICATION UNIT (SENDING MEANS, COMMUNICATION MEANS)
64 DATA PROCESSING UNIT (FILE ATTRIBUTE SETTING MEANS, DETERMINATION MEANS, SELECTION MEANS, ACQUISITION MEANS)
70 MAP DB (NAVIGATION MAP DATA)
72 PARTITION FILE
74 UPDATE MANAGEMENT INFORMATION
90 MAP DB (SERVER MAP DATA)
92 SERVER FILE (DIFFERENCE FILE)
94 DIFFERENCE MANAGEMENT INFORMATION

### BEST MODES FOR CARRYING OUT THE INVENTION

Hereinafter, several embodiments of the present invention will be described with reference to the drawings.

### (First Embodiment)

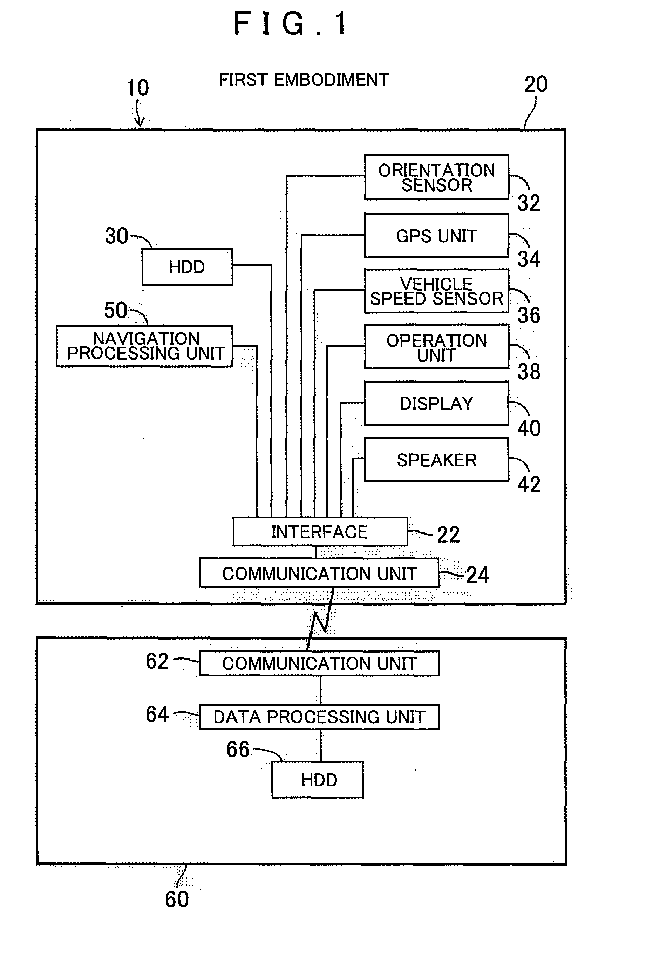

FIG. 1 is a block diagram showing a hardware configuration of a map update system 10, which is formed from a navigation device 20 and a center 60 serving as a map server, according to a first embodiment of the present invention.

### (Hardware Configuration)

The navigation device 20 is mounted in a vehicle such as an automobile or a motorcycle. The navigation device 20 provides guidance for a travel point of the host vehicle or a recommended route to a destination point. An interface 22 is structured from an AD converter, a DA converter, or the like, which performs conversions of signal modes from a navigation processing unit 50 and respective blocks within the navigation device 20 and also performs conversions of communication signal modes from the center 60 via a communication unit 24.

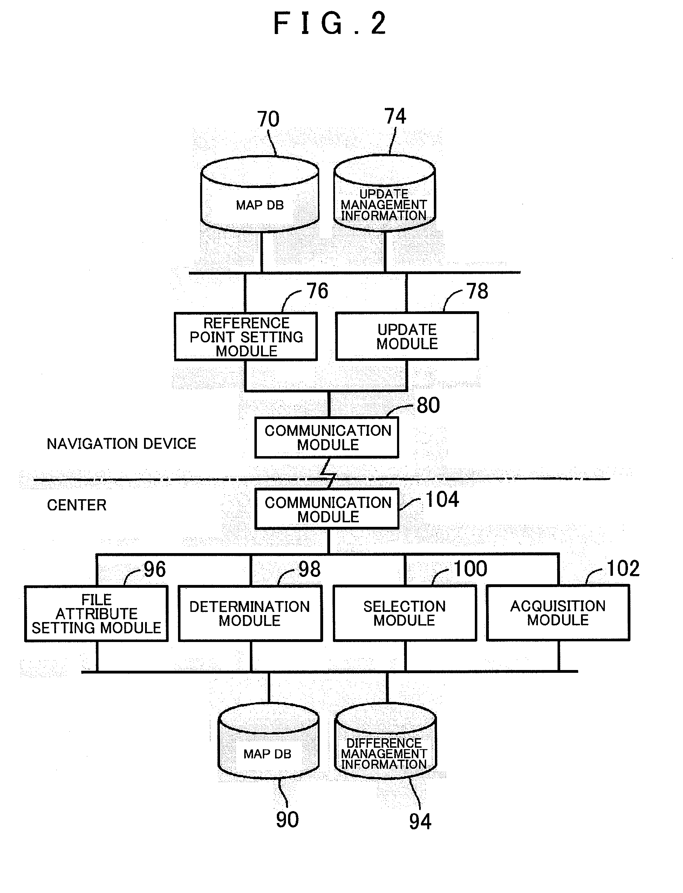

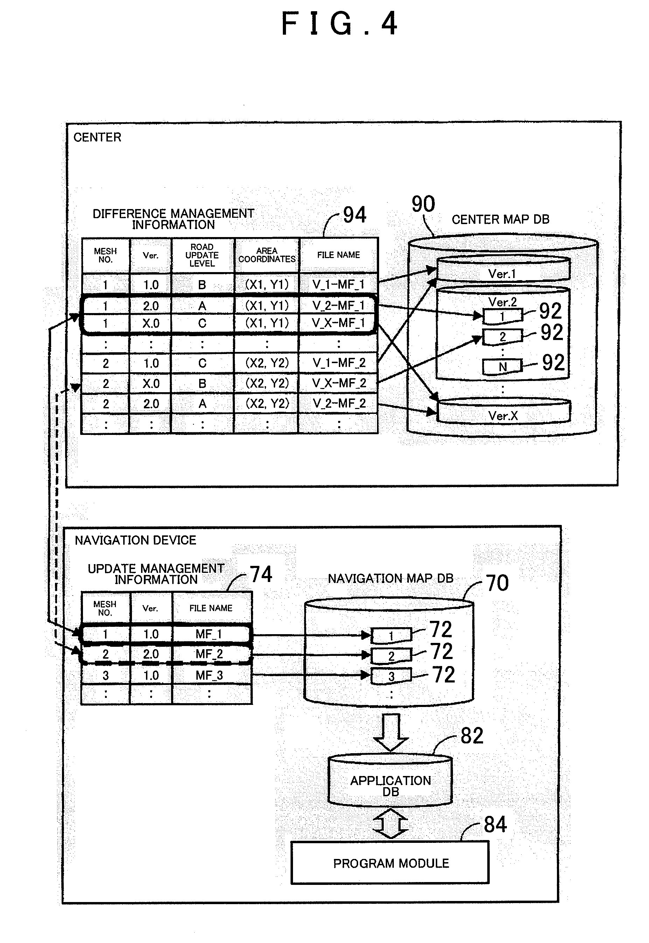

Stored within a hard disk drive (HDD) 30 are a map database (map DB 70, see FIG. 2) that serves as navigation map data, update management information 74 (see FIG. 2) of the map DB 70, and an application DB 82 (see FIG. 4) that is used by various program modules 84 (see FIG. 4) of the navigation device 20, and so forth.

An orientation sensor 32 is structured by a geomagnetic sensor that is used for dead reckoning navigation, a right-left vehicle wheel speed difference sensor, a vibration gyro, a gas rate gyro, a fiber optic gyro, or the like.
A GPS sensor 34 is structured by an antenna, application specific integrated circuit (ASIC), or the like for receiving pointing data sent from three or four satellites used in satellite navigation, and outputting latitude and longitude data regarding a current position of the host vehicle.

A vehicle speed sensor 36 that detects a traveling speed of the host vehicle is also used as position detecting means based on dead reckoning navigation. A travel distance is calculated by finding the integral of the vehicle speed and time. The traveling distance may also be calculated using a Doppler speed-over-ground sensor that uses electric waves and ultrasonic waves, and a speed-over-ground sensor that uses an optical spatial filter.
An operation unit 38 is structured by a remote controller, an operation panel and the like that are used for instructing an update of the map DB 70, setting a reference point when updating the map DB 70, and other various input such as a destination. The destination may be given through audio input using a microphone, with the destination given by audio input set by voice recognition.

A display 40 is structured by a liquid crystal display (LCD), head up display (HUD), or the like that is used for a map and various warning displays. The warning display is separate from the display used for map display, and may be one that displays a vehicle speed, a distance, or an engine speed, for example.

A speaker 42 is used for audio output to provide guidance regarding a vehicle travel route or travel state and used for audio output to communicate various warnings. The speaker 42 may also be used in combination as an audio speaker, or provided exclusively for navigation use.
The navigation processing unit 50 is a computer that is structured from a CPU, a RAM, a ROM, and so forth. The CPU of the navigation processing unit 50 executes a control program by which respective portions within the navigation device 20 are controlled, and identifies the road on which the host vehicle is traveling. In addition, the navigation processing unit 50 updates the map DB 70 using a difference file obtained from the center 60.

The RAM of the navigation processing unit 50 temporarily stores data and programs used in processing by the CPU. The ROM of the navigation processing unit 50 is a re-writable nonvolatile memory in which the control program executed by the CPU is stored, and for which an EEPROM or the like is used. The control program may also be stored in the HDD 30. The control program, various program modules, and data such as an update file for the map DB 70 are downloaded from a predetermined center through communication with a mobile phone, data communication module (DCM) or the like. Furthermore, such data used by the navigation device 20 may be read out from a computer-readable storage medium such as a removable memory (not shown) and stored in the HDD 30 or the ROM.

Stored within a HDD 66 of the center 60 are a map database (map DB 90, see FIG. 2) that serves as server map data, difference management information 94 (see FIG. 2) of the map DB 90, and so forth.
Using a communication unit 62, the center 60 performs sending and receiving of data with the communication unit 24 of the navigation device 20.
A data processing unit 64 is structured from a CPU, a RAM, a ROM, and so forth. By executing a data processing program, the CPU of the data processing unit 64 generates a newest version of a difference file for updating the map DB 90, and updates the difference management information 94.

### (Software Configuration)

FIG. 2 is a block diagram showing a software configuration of a control program for the map update system 10.

### (Block Diagram of the Navigation Device 20)

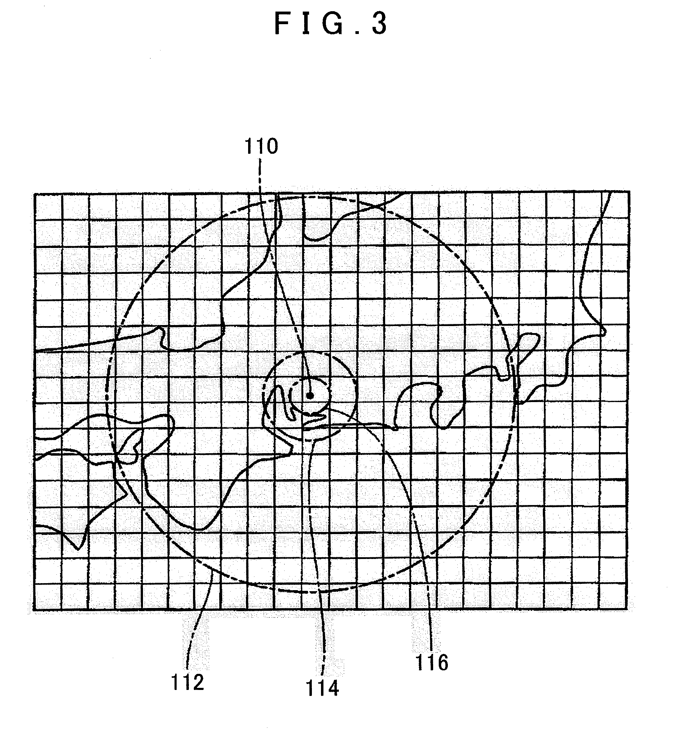

The map DB 70 is a database structured by information that digitally represents a map in graph form. The map DB 70 is used for detecting the host vehicle position, as well as for searching and displaying a recommended route. In the map DB 70, intersections, turns, dead ends, and the like are defined as nodes, while a road is defined as a link that connects a node with another node. For the respective links, the distance, speed limit, number of lanes, road width, radii of corners, and so forth are defined as attribute information. The map DB 70, as FIG. 3 shows, is structured by partition files 72 (see FIG. 4) that correspond to map partitions that have been demarcated in mesh form. The meshes are assigned with unique numbers. Furthermore the navigation device 20 structures the application DB 82, which is appropriate for the various program modules 84, based on the data of the map DB 70.

The update management information 74 manages in the form of a table such file attributes as a mesh number, version, and file name of the partition files 72 corresponding to the meshes of the map DB 70 (see FIG. 4).
A reference point setting module 76 is a program component that enables the navigation processing unit 50 to function as reference point setting means. The reference point setting module 76 sets the reference point of an area to be updated, and such information is sent from a communication module 80 to the center 60 when the map DB 70 is updated. As the reference point, the reference point setting module 76 may set a user's residence, the host vehicle's current position, a place name input from the operation unit 38 by the user, a place name obtained from a list of place names shown on the display 40, and so forth.

An update module 78 is a program component that enables the navigation processing unit 50 to function as update means. The update module 78 sets a server file 92 (see FIG. 4) that was generated as a difference file and sent from the center 60 as an update file, uses this update file to update a partition file 72 of mesh map DB 70 that corresponds to the update file, and changes the version of the updated partition file 72 in the update management information 74.

The communication module 80 is a program component that enables the navigation processing unit 50 to function as receiving means and communication means. The communication module 80 sends data to the center 60 in response to a send request from the control program of the navigation device 20, and receives various data including map data from the center 60.

### (Block Diagram of the Center 60)

Similar to the map DB 70, a map DB 90 is a database structured by information that digitally represents a map in graph form. As FIG. 4 shows, the map DB 90 is managed as a collection of server files 92 for each respective version. The server files 92 of the map DB 90 correspond to the partition files 72 of the map DB 70, and the server files 92 are assigned with the same mesh numbers as corresponding partition files 72. With version 1.0 serving as a reference, the server files 92 structuring map data for subsequent versions are generated as difference files, which are portions that have changed from an immediately prior version, when the map DB 90 is updated.

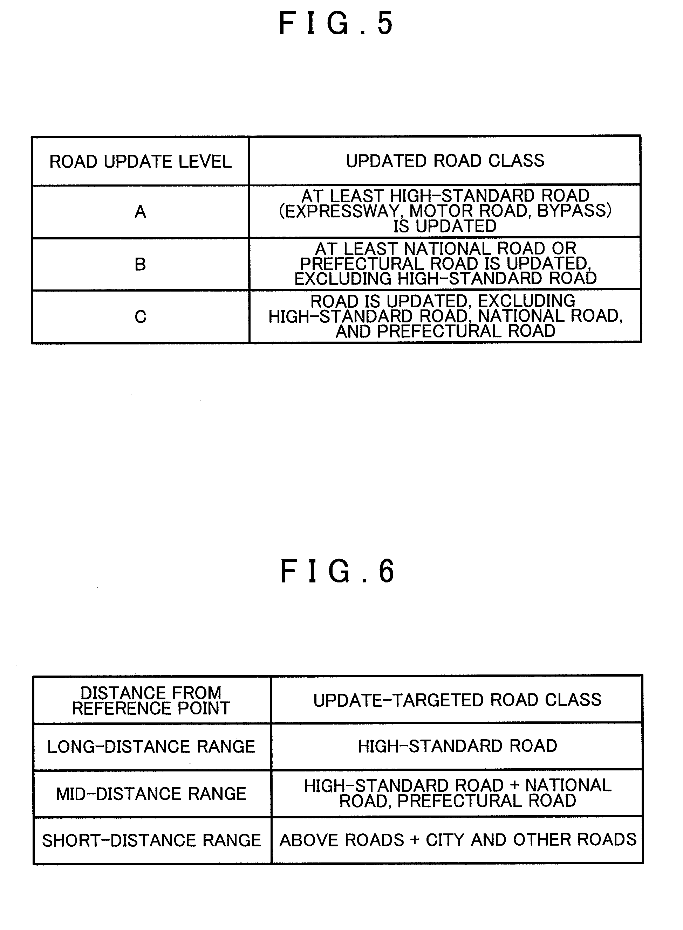

The difference management information 94 manages in the form of a table such file attributes as the mesh number, version, road update level, mesh coordinates corresponding with the server files 92, and file name of the server files 92 of the map DB 90. As FIG. 5 shows, the road update level is divided into levels A, B, and C, for example, and indicates updated road classes in the server files 92 for each version corresponding to the partition files 72. The updated road class differs for every road update level. The road update level A indicates that at least a high-standard road is updated; the road update level B indicates that at least a national road or a prefectural road other than a high-standard road is updated; and the road update level C indicates that a road other than a high-standard road, a national road, or a prefectural road is updated.

A file attribute setting module 96 is a program component that enables the data processing unit 64 to function as file attribute setting means. The file attribute setting module 96 calculates a distance between an applicable mesh and a reference point 110 based on the reference point 110 (see FIG. 3) set by the reference point setting module 76 for updating the map DB 70 and the coordinates of meshes in the difference management information 94. The file attribute setting module 96 then identifies this mesh as positioned in any one of a long-distance range 112, a mid-distance range 114, and a short-distance range 116 (see FIG. 3) from the reference point 110. Then, as FIG. 6 shows, depending on the distance of the respective meshes from the reference point 110, a file determination attribute, namely, a road class targeted for update, is set in order to determine whether the partition file 72 of the map DB 70 that corresponds to the mesh must be updated.

A determination module 98 is a program component that enables the data processing unit 64 to function as determination means. The determination module 98 determines whether the partition file 72 in the map DB 70 of the navigation device 20 is a file that should be updated, based on the difference management information 94 of the center 60 and the update management information 74 sent to the center 60 from the navigation device 20.

A specific example of determining whether the partition file 72 must be updated will be described based on FIG. 4.
A version of the partition file 72 of mesh No. 1 is 1.0, as shown in the update management information 74. When referencing the difference management information 94, a file for version 1.0, 2.0, X.0 (with X.0 being newer than 2.0) exists in the server file 92 that corresponds to mesh No. 1. The distance between the reference point 110 and a partition of mesh No. 1 is calculated in the file attribute setting module 96, and the partition of mesh No. 1 is assumed to be at the long-distance range 112 from the reference point 110. Accordingly, the file determination attribute of the partition file 72 of mesh No. 1 is designated as a high-standard road (expressway or motor road) road class targeted for update in the long-distance range 112.

First, the determination module 98 compares the versions of the update management information 74 and the difference management information 94, and with respect to mesh No. 1, determines if the version of the server file 92 is newer than the version 1.0 partition file 72. Next, a comparison is made of the road update level of the applicable server file 92 indicated in the difference management information 94 and the file determination attribute set by the file attribute setting module 96. The road update levels of the version 2.0, X.0 server files 92, whose versions are newer than the partition file 72 in mesh No. 1, are A and C. The road update level A indicates that a high-standard road is updated in the server file 92, and the road update level C indicates that high-standard road is not updated. In other words, the high-standard road that should be updated in mesh No. 1 partition file 72 included in the long-distance range 112 is updated in mesh No. 1, version 2.0 server file 92. Accordingly, the determination module 98 determines that the mesh No. 1 partition file 72 is the file that should be updated.

Next, a description will be given on determining whether the mesh No. 2 partition file 72 must be updated. The version of the mesh No. 2 partition file 72 is 2.0, as indicated in the update management information 74. The file determination attribute of the mesh No. 2 partition file 72 is also a high-standard road (expressway or motor road) road class targeted for update in the long-distance range 112, similar to the mesh No. 1 partition file 72.

Referring to the difference management information 94, the server file 92 is version X.0, that is, newer than the version of the partition file 72 in mesh No. 2, and is designated with the road update level B. The road update level B indicates that at least a national road or a prefectural road other than a high-standard road is updated in the server file 92. In other words, a high-standard road that should be updated in the mesh No. 2 partition file 72 has not been updated in the mesh No. 2 server file 92 whose version is newer than the mesh No. 2 partition file 72. Accordingly, the determination module 98 determines that, despite the existence of a server file 92 whose version is newer than the mesh No. 2 partition file 72, the mesh No. 2 partition file 72 is not a file that should be updated.

Considered below is a case where the file determination attribute of the mesh No. 2, version 2.0 partition file 72, as indicated in the update management information 74 described above, is a road of all road classes targeted for update in the short-distance range 116.
Referring to the difference management information 94, it is indicated in the mesh No. 2, version X.0, road update level B server file 92, whose version is newer than the mesh No. 2 partition file 72, that at least a national road or a prefectural road other than a high-standard road is updated, as mentioned above. In other words, the roads that should be updated in the mesh No. 2 partition file 72, whose file setting attribute designates roads of all road classes, are updated in the mesh No. 2, version X.0, road update level B server file 92. Accordingly, the determination module 98 determines that the mesh No. 2 partition file 72 is a file that should be updated.

A selection module 100 is a program component that enables the data processing unit 64 to function as selection means. From the map DB 90, the selection module 100 selects the server file 92 corresponding to the road class that is the file determination attribute of the partition file 72 which the determination module 98 has determined should be updated. In terms of the example described earlier, with respect to the mesh No. 1 partition file 72, the selection module 100 selects as the update file the mesh No. 1, version 2.0, road update level A server file 92 in the map DB 90 as the update file.

With respect to the partition file 72 which the determination module 98 has determined as requiring updating, in the present embodiment, regardless of whether the road update level of the server file 92 is applicable to the targeted update of the partition file 72, the server file 92 whose version is newer than the partition file 72 with the same mesh No. is selected as the update file. Accordingly, with respect to the mesh No. 1 partition file, the mesh No. 1, version X.0, road update level C server file 92 is selected as the update file, in addition to the mesh No. 1, version 2.0, road update level A server file 92.

An acquisition module 102 is a program component that enables the data processing unit 64 to function as acquisition means. From the map DB 90, the acquisition module 102 obtains the server file 92 that has been selected by the selection module 100 in order to update the partition file 72.
A communication module 104 is a program component that enables the data processing unit 64 to function as sending means and communication means. The communication module 104 sends the server file 92 obtained by the acquisition module 102 to the navigation device 20. In addition, the communication module 104 receives the reference point 110 from the navigation device 20.

Next, the operation of the map update system 10 will be described.

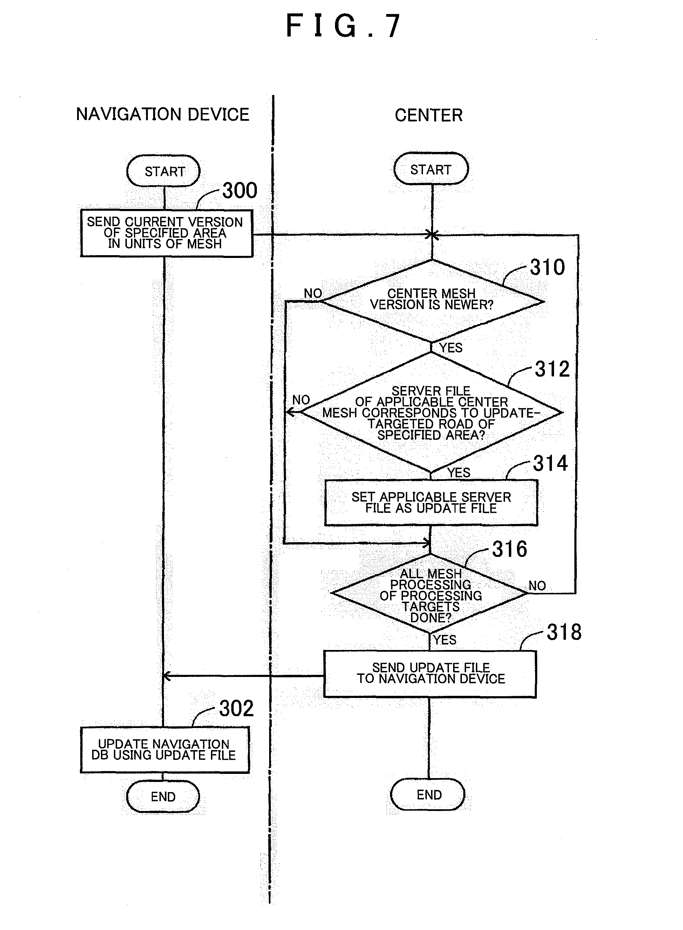

FIG. 7 is a flowchart showing the flow of a map data update program of the map update system 10. In the present embodiment, the processing shown in FIG. 7 is executed in the navigation device 20 and the center 60.

### (Navigation Device 20-Side Processing)

At step 300, the navigation device 20 sends the reference point 110 and the update management information 74 for updating the map DB 70 to the center 60. Then, the navigation device 20 waits until the update file to update the map DB 70 is sent from the center 60.
Once the update file is sent from the center 60, at step 302, the navigation device 20 updates the map DB 70 using the sent update file.

### (Center 60-Side Processing)

At step 310, the center 60 compares the update management information 74 sent from the navigation device 20 and the difference management information 94 of the center 60, and determines whether the version of the map DB 90 in the center 60 in newer than the map DB 70 for the same mesh No. If the version of the map DB 90 in the center 60 is newer than the version of the map DB 70 in the navigation device 20, then at step 312 the center 60 determines that the road update level of the server file 92 in the map DB 90 corresponds to an update-targeted road of the specified area. More specifically, with respect to the server file 92 of the mesh in the specified area as mentioned above, the center 60 determines whether a road of a road class that should be updated has been updated in this mesh. If updated, then the center 60 obtains the applicable server file 92 from the map DB 90 as the update file to be sent to the navigation device 20. The routine then proceeds to step 316.

If the version of the map DB 90 in the center 60 is the same as or older than the version of the map DB 70 in the navigation device 20, then at step 316 the center 60 determines whether processing has been performed for all meshes. If an unprocessed mesh remains, then the routine returns to the processing at step 310.
Once processing has been performed for all meshes, at step 318 the center 60 sends the server file 92 obtained from the map DB 90 to the navigation device 20 as the update file.

In the first embodiment, the road class that should be updated changes depending on the distance from the reference point 110. Therefore, compared to updating the map DB 70 for all road classes using a version of the difference file of the map DB 90 that is newer than that of the map DB 70, less data volume is needed to update the map DB 70. As a consequence, the communication time to send the update data from the center 60 to the navigation device 20 is also reduced, thus lowering the communication fee. In addition, the data volume to update the map DB 70 is reduced, which results in a decreased load on the navigation device 20 when updating the map DB 70.
In addition, the server files 92 that correspond to the partition files 72 are managed for every road update level corresponding to the updated road classes. Therefore, even in an update range where all road classes are targeted for update, such as the short-distance range 116 for example, it is possible to select only the server files 92 whose versions are newer than that of the partition files 72 as the update files, without selecting the server files 92 for all road update levels. As a consequence, the data volume to update the map DB 70 can be further reduced, which results in a decreased load on the navigation device 20 when updating the map DB 70.

Furthermore, instead of the navigation device 20, the center 60 sets the file determination attribute, determines whether the partition file 72 must be updated, and selects the update file to be obtained from the map DB 90. Therefore, the processing load of the navigation device 20 needed to update the map DB70 is decreased.
For users using the navigation device 20 as a vehicular navigation device, only information on expressways and motor roads, i.e., high-standard roads, is needed for partitions far from the reference point 110. However for partitions around the reference point 110, road information is often needed for an extremely large number of road classes, including high-standard roads, national roads, prefectural roads, city roads and other roads. Hence, in the first embodiment, all road classes in the range of the short-distance range 116 centered around the reference point 110 are targeted for update, whereas only roads on the high-standard side are targeted for update further out from the reference point 110. By thus targeting more road classes for update in partitions closer to the reference point 110, it is possible to update the map DB 70 in a manner convenient for the user using the navigation device 20 as a vehicular navigation device.

### (Second Embodiment)

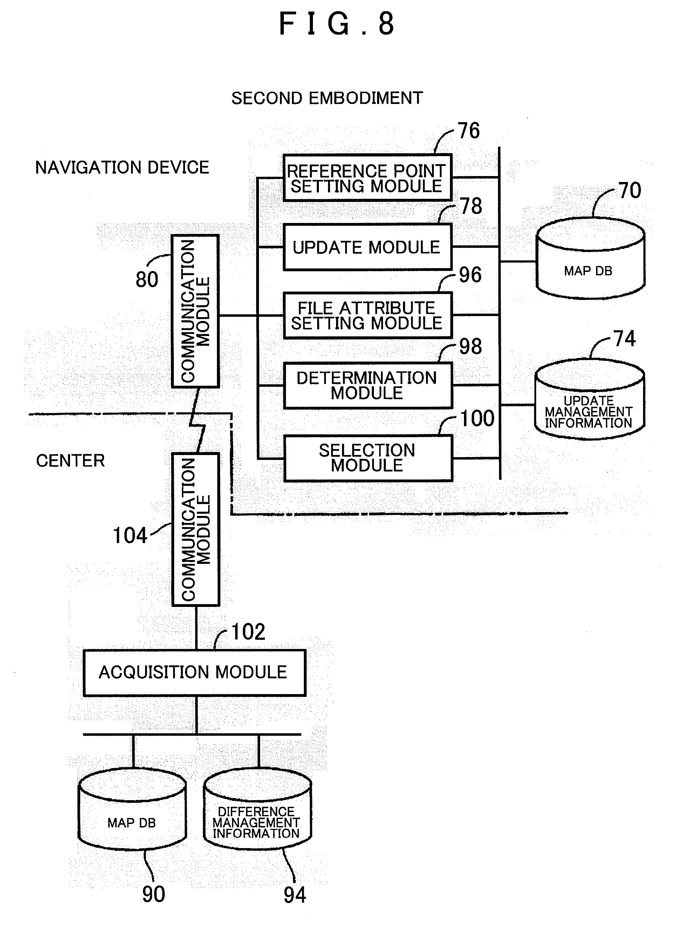

FIG. 8 is a block diagram showing a software configuration of a control program for the map update system 10 according to a second embodiment of the present invention. Note that components identical for all practical purposes to those in the first embodiment are assigned like reference numerals. In the second embodiment, setting the file determination attribute for determining whether the partition file 72 of the map DB 70 must be updated, determining whether the partition file 72 must be updated, and selecting the update file to be obtained from the map DB 90 are performed by the navigation device 20 instead of the center 60.

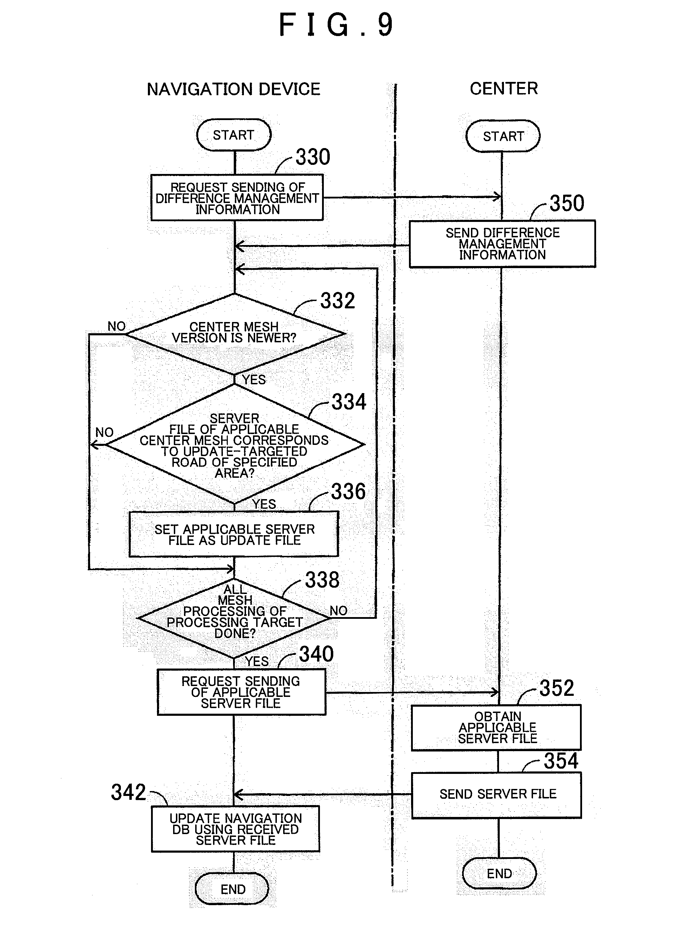

Next, the flow of a map data update program according to the second embodiment will be described based on a flowchart shown in FIG. 9.
At step 330, the navigation device 20 requests sending of the difference management information 94 from the center 60.
At step 350, the center 60 sends the difference management information 94 to the navigation device 20.

The navigation device 20 then executes processing at steps 332 to 338 that corresponds to that at steps 310 to 316 of the first embodiment as shown in FIG. 7.
At step 340, the navigation device 20 requests sending of the server file 92 required for updating from the center 60.

At step 352, the center 60 obtains the server file 92 required for updating from the map DB 90, and at step 354, the center 60 sends the obtained server file 92 to the navigation device 20 as the update file.
The navigation device 20 then updates the map DB 70 using the update file sent from the center 60 at step 342.

### (Other Embodiments)

In the embodiments described above, the file determination attribute was set depending on the distance from the reference point 110 to respective meshes. However, the user may input the file determination attribute. For example, regardless of the distance from the reference point 110 to the respective meshes, the user may input a file determination attribute such as "high-standard roads in all areas of Aichi Prefecture". As a result, update files designated update level A, i.e., for which at least high-standard roads are updated, among the partition files included in Aichi Prefecture are updated regardless of the distance from the reference point 110. Thus, the user can update only the partition files of necessary partitions.

In the embodiments described above, the road class was adopted as a file determination attribute depending on the distance from the reference point. However, other classifications besides the road class may also be adopted as the file determination attribute depending on the distance from the reference point, such as distinctions between a head office and branch offices of a public facility, or distinctions between a head office and branch offices of a bank or the like.
Also, in cases where the map DB has a hierarchical structure and there are different data detail levels according to rank, different ranks may set as the file determination attribute depending on the distance of a data detail level from the reference point.

In the above embodiments, the map DB is divided into meshes of the same size, and the respective meshes are set as partitions. However, administrative ranges such as prefectures, cities, towns, and villages may be set as partitions instead. Also, the ranges of long-distance range, mid-distance range, and short-distance range from the reference point were divided into circles centered around the reference point. However, the boundary between the distance ranges may be set according to administrative ranges such as prefectures, cities, towns, and villages.

In the above embodiments, the navigation device was described as being mounted in a vehicle. However, the present invention is not limited to this application, and may be applied, for example, to a navigation device that is carried by the user in order to refer to a map.
In addition, the allocation of the file attribute setting module, the determination module, and the selection module based on the navigation device 20 and the center 60 is not limited to the modes illustrated in the first and second embodiments, and any range of combinations by which processing is enabled may be used for allocation based on the navigation device 20 and the center 60.

## Claims

1. A navigation device that updates navigation map data using an update file obtained from server map data by a map server that manages the server map data, **characterized by** comprising:
communication means for receiving the update file for updating a partition file that corresponds to a respective partition of the navigation map data, which is divided into a plurality of partitions, from the map server; and
update means for updating the navigation map data using the update file, wherein
the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.

2. The navigation device according to claim 1, **characterized by** further comprising:
reference point setting means for setting a reference point used to update the navigation map data, wherein
the file determination attribute specifies the update-targeted road class depending on a distance between the reference point and the partition.

3. The navigation device according to claim 1 or 2, **characterized in that**
the server file of the server map data having a version identical to or more recent than a reference version is a difference file from an immediately prior version.

4. The navigation device according to any one of claims 1 to 3, **characterized by** further comprising:
file attribute setting means for setting the file determination attribute;
determination means for determining whether the partition file must be updated by comparing the file determination attribute and a file attribute that corresponds to the road update level of the server file; and
selection means for selecting the update file that satisfies the file determination attribute from the server file, with the update file used to update the partition file determined by the determination means as requiring updating.

5. The navigation device according to any one of claims 1 to 3, **characterized in that**
the map server sets the file determination attribute, determines whether the partition file must be updated by comparing the file determination attribute and a file attribute that corresponds to the road update level of the server file, and selects the update file that satisfies the file determination attribute from the server file, with the update file used to update the partition file determined as requiring updating based on this determination result.

6. The navigation device according to any one of claims 1 to 5, **characterized in that**
there are more classes regarding the update-targeted road class specifying the file determination attribute for partitions closer to the reference point.

7. A map server that obtains an update file from server map data in order to update navigation map data using a navigation device, **characterized by** comprising:
acquisition means for obtaining the update file for updating a partition file that corresponds to a respective partition of the navigation map data, which is divided into a plurality of partitions, from the server map data; and
communication means for sending the update file to the navigation device, wherein
the update file is selected from a server file of the server map data, which is managed for every road update level corresponding to an updated road class in the partition and which corresponds to a respective partition file, with the update file satisfying a file determination attribute that specifies an update-targeted road class to be updated in the partition file.

8. The map server according to claim 7, **characterized in that**
the file determination attribute specifies the update-targeted road class depending on a distance between a reference point used to update the navigation map data and the partition.

9. The map server according to claim 7 or 8, **characterized by** further comprising:
file attribute setting means for setting the file determination attribute;
determination means for determining whether the partition file must be updated by comparing the file determination attribute and a file attribute that corresponds to the road update level of the server file; and
selection means for selecting the update file that satisfies the file determination attribute from the server file, with the update file used to update the partition file determined by the determination means as requiring updating.

10. An update map system that updates navigation map data using an update file obtained from server map data, **characterized by** comprising:
file attribute setting means for setting a file determination attribute that specifies an update-targeted road class to be updated in a partition file corresponding to a respective partition of the navigation map data, which is divided into a plurality of partitions;
determination means for determining whether the partition file must be updated by comparing the file determination attribute and a file attribute that corresponds to a road update level of a server file in server map data, wherein the server file corresponds to the respective partition file and is managed for every road update level corresponding to an updated road class in the partition;
selection means for selecting the update file that satisfies the file determination attribute from the server file, with the update file used to update the partition file determined by the determination means as requiring updating;
acquisition means for obtaining the update file selected by the selection means from the server map data;
sending means for sending the update file obtained by the acquisition means;
receiving means for receiving the update file sent from the sending means; and
update means for updating the navigation map data using the update file received by the receiving means.

11. The map update system according to claim 10, **characterized by** further comprising:
reference point setting means for setting a reference point used to update the navigation map data, wherein
the file determination attribute specifies the update-targeted road class depending on a distance between the reference point and the partition.

12. A map update method that updates navigation map data using an update file obtained from server map data by a map server that manages the server map data, **characterized by** including:
a communication step for receiving the update file for updating a partition file that corresponds to a respective partition of the navigation map data, which is divided into a plurality of partitions, from the map server; and
an update step for updating the navigation map data using the update file, wherein
the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.

13. A map update program that updates navigation map data using an update file obtained from server map data by a map server that manages the server map data, **characterized in that**
a computer is enabled to function as communication means for receiving the update file for updating a partition file that corresponds to a respective partition of the navigation map data, which is divided into a plurality of partitions, from the map server, and
the computer is enabled to function as update means for updating the navigation map data using the update file, wherein
the update file is selected from a server file of the server map data, which corresponds to the respective partition file and which is managed for every road update level corresponding to an updated road class in the partition, with the update file satisfying a file determination attribute that specifies an update-targeted road class to be updated in the partition file.
